(19) Europäisches Patentamt
European Patent Office
Office européen des brevets

(11) **EP 2 062 705 A1**

(12) **EUROPÄISCHE PATENTANMELDUNG**

(43) Veröffentlichungstag:
   **27.05.2009  Patentblatt 2009/22**

(51) Int Cl.:
   ***B26F 1/26*** *(2006.01)*        ***B23Q 1/48*** *(2006.01)*
   ***B23Q 1/54*** *(2006.01)*

(21) Anmeldenummer: **08165913.8**

(22) Anmeldetag: **06.10.2008**

(84) Benannte Vertragsstaaten:
   **AT BE BG CH CY CZ DE DK EE ES FI FR GB GR HR HU IE IS IT LI LT LU LV MC MT NL NO PL PT RO SE SI SK TR**
   Benannte Erstreckungsstaaten:
   **AL BA MK RS**

(30) Priorität: **26.11.2007  DE 102007057261**

(71) Anmelder: **BAM Bundesanstalt für Materialforschung und-Prüfung**
   **12205 Berlin (DE)**

(72) Erfinder:
   • **Osterloh, Dr. rer. nat. Kurt**
    **10711, Berlin (DE)**
   • **Ewert, Prof. Dr. Uwe**
    **14513, Teltow (DE)**
   • **Knischek, Heinz-Jürgen**
    **12353, Berlin (DE)**
   • **Zscherpel, Dr. rer. nat. Uwe**
    **16548, Glienicke (DE)**

(74) Vertreter: **Reinstädler, Diane et al Anwaltskanzlei,**
   **Gulde Hengelhaupt Ziebig Schneider,**
   **Wallstrasse 58/59**
   **10179 Berlin (DE)**

(54) **Vorrichtung und Verfahren zur Herstellung von Schlitzblenden für hochenergetische Strahlung**

(57)   Um eine Vorrichtung und ein entsprechendes Verfahren zur Herstellung einer Schlitzblende anzugeben, welche einen möglichst einfachen Produktionsmechanismus ermöglichen, ist vorgesehen, dass die Vorrichtung ein Schneidwerkzeug (12), welches geeignet ist, entlang einer geraden Linie zu schneiden, und Mittel, welche geeignet sind, eine relative Bewegung zwischen dem Schneidwerkzeug (12) und einem Werkstück (10) zu bewirken derart, dass das Schneidwerkzeug (12) das Werkstück (10) entlang einer Linie schneidet, die einem Strahlengang in der herzustellenden Schlitzblende entspricht, umfasst.

Figur 1

**Beschreibung**

Die Erfindung betrifft eine Vorrichtung und ein Verfahren zur Herstellung von Schlitzblenden für hochenergetische Strahlung gemäß den Oberbegriffen der Ansprüche 1 und 13.
Aus der DE 10 2005 029 674.2 und aus der DE 10 2005 048 519.7-54 sind eine bildgebende Blende für hochenergetische Strahlung und eine brennpunktorientierte Walzendrehblende bekannt. Beiden Vorrichtungen ist gemeinsam, dass hochenergetische Strahlung nur für gewisse Strahlrichtungen die Blenden passieren kann, dass die Strahlung dagegen in allen anderen Strahlrichtungen von den Blenden absorbiert wird. Dies wird dadurch erreicht, dass die Blenden in geeigneter Weise geschwungene Schlitze umfassen, welche die Strahlung nur entlang bestimmter Geraden durchlässt. Mithilfe dieser Art von Blenden können hoch-energetische Strahlenquellen abgebildet werden, wo dies aufgrund der erforderlichen Schichtdicke des Abschirmmaterials nicht mit einer einfachen Lochblende möglich ist.

Die aus dem Stand der Technik bekannten Schlitzblenden sind nicht einfach herzustellen. Die räumlich verwundenen Flächen erfordern ein Mindestmaß an Präzision, um homogene Spaltbreiten von einem Millimeter und deutlich darunter zu gewährleisten. Es besteht also eine doppelte Herausforderung, sowohl hinsichtlich der Formgebung als auch hinsichtlich der Präzision.

Mit programmierbaren Fräsmaschinen ist zumindest der Bau einer (statischen) bildgebenden Blende möglich, allerdings aufgrund der komplexen Formen nur mit hohem Programmieraufwand. Es sind besonders hohe Anforderungen an die Präzision gestellt, wenn zum Beispiel der beabsichtigte Verwendungszweck die Abbildung des Brennfleckes einer Röntgenröhre bei hoher Energie (> 200 keV) sein soll. Hierbei versagen herkömmliche Lochblenden, da die erforderliche Schichtdicke die Konstruktion einer Lochblende nicht zulässt. Der Vorteil der Schlitzblende liegt darin, dass sie mit größerer Schichtdicke realisierbar ist, ohne ihre bildgebende Eigenschaft zu verlieren (zum Beispiel 30 mm für Wolfram). Aufgrund der Größe von Brennflecken im Millimeterbereich ist die Fertigung von Schlitzen mit einer Präzision unterhalb eines Millimeters erforderlich. Deshalb ist auch eine Möglichkeit in Betracht zu ziehen, die ein mechanisches Nachschleifen erlaubt. Ein Nachschleifen mit einer programmierbaren Werkzeugmaschine erfordert wiederholtes Eingreifen ins Steuerprogramm.

Die erwähnte Walzenblende ist mit den bislang zur Verfügung stehenden Werkzeug- und Fräsmaschinen nicht herstellbar, da neben den Bewegungen im kartesischen Raum auch Drehungen erforderlich sind. Diese sind bei den vorhandenen und zur Verfügung stehenden Einrichtungen nicht vorgesehen.

Aufgabe der Erfindung ist es, eine Vorrichtung und ein Verfahren zur Herstellung von Schlitzblenden bereitzustellen, welche sich bewusst auf die Verwendung von allgemein verfügbaren Werkzeugen und den Bau von Hilfsmitteln, die aus gängigem Halbzeug angefertigt werden können, beschränken. Für den Fall, dass Präzisionsfräsen und Schneidstrahleinrichtungen zumindest mit einer fest vorgegebenen Fräsrichtung vorhanden sind, ist es insbesondere eine Aufgabe der Erfindung, eine Halterung für das Werkstück zu finden, die mechanisch steuerbar aufgehängt und für die Bearbeitung ausreichend stabil ist. Erfindungsgemäß wird diese Aufgabe mittels einer Vorrichtung mit den im Anspruch 1 genannten Merkmalen oder mittels eines Verfahrens mit den im Anspruch 13 genannten Merkmalen gelöst.

Dadurch, dass die erfindungsgemäße Vorrichtung ein Schneidwerkzeug, welches geeignet ist, entlang einer geraden Linie zu schneiden, und Mittel, welche geeignet sind, eine relative Bewegung zwischen dem Schneidwerkzeug und einem Werkstück zu bewirken derart, dass das Schneidwerkzeug das Werkstück entlang einer Linie schneidet, die einem Strahlengang in der herzustellenden Schlitzblende entspricht, umfasst, wird erreicht, dass eine Schlitzblende hergestellt werden kann, welche nur Strahlengänge in vorbestimmten Richtungen passieren lässt und Strahlung bezüglich anderer Richtungen absorbiert. Der Schneidevorgang kann beispielsweise mit einem Abrasivschneidstrahl oder mit einem rotierenden Schneidblatt erfolgen, das linear auf einer Schiene fortbewegt wird.
In bevorzugter Ausgestaltung der Erfindung ist vorgesehen, dass das Schneidwerkzeug geeignet ist, entlang einer festen Richtung zu schneiden, insbesondere, dass das Schneidwerkzeug unbeweglich angeordnet ist. Bevorzugt ist somit, dass das Schneidwerkzeug feststehend ist und das Werkstück daran herumgeführt wird. Ausgangspunkt dieser bevorzugten Ausführung ist, das Werkstück nicht in eine feste Halterung einzuspannen und das Werkzeug zu führen, sondern es umgekehrt kontrolliert beweglich um eine Fräse bzw. einen Schneidstrahl herumzuführen.
Die Bewegung des Werkstückes erfolgt im Allgemeinen mit zwei Bewegungen, die mechanisch miteinander gekoppelt sein können und mit einem einzigen Motor angetrieben werden können. Bei mechanischem Fräsen wird der Motor schrittweise fortbewegt, bei einem Schneidstrahl kann er auch kontinuierlich mit entsprechend langsamer Geschwindigkeit laufen, die dem Fräsvorgang angepasst ist.

Bevorzugt ist, dass der Motor eine Welle antreibt, die fest über Zahnräder mit vorgegebenen Übersetzungsverhältnissen mit dem Werkstück verbunden ist. In der praktischen Ausführung kann es sich um einen kleinen, drehzahlsteuerbaren Elektromotor oder um eine handelsübliche regelbare Bohrmaschine oder elektrischen Schraubendreher handeln. Im Falle einer schrittweisen mechanischen Fräsung mit hoher Präzision ist der Einsatz eines Schrittmotors sinnvoll, der sich nur zwischen den einzelnen Frässtufen bewegt. Das Fräsmuster wird durch den mechanischen Vortrieb bestimmt und braucht nicht eigens programmiert zu werden.

In bevorzugter Ausgestaltung der Erfindung ist vorgesehen, dass die erste Drehachse entlang einer zweiten Richtung senkrecht zur Schneidrichtung des Schneidwerkzeugs verläuft und dass die Mittel dazu geeignet sind, eine Rotationsbewegung des Halteelements um die erste Drehachse und gleichzeitig eine Translationsbewegung des Halteelements entlang der zweiten Richtung zu bewirken.

Die Rotationsbewegung und die Translationsbewegung des Halteelements können linear gekoppelt sein.

Die Mittel können eine erste und eine zweite Gewindewelle umfassen, welche beide in der zweiten Richtung verlaufen, und wobei eine Rotationsbewegung der beiden Gewindewellen durch ein Zahnradsystem gekoppelt ist.

Die erste Gewindewelle kann einen Bereich umfassen, welcher als Schneckenwelle ausgeformt ist, durch welchen ein Haltearm, mit welchem die zweite Gewindewelle verbunden ist, entlang der zweiten Richtung bewegbar ist.

In einer weiteren bevorzugten Ausgestaltung der Erfindung ist vorgesehen, dass die Mittel dazu geeignet sind, eine Rotationsbewegung des Halteelements um die erste Drehachse und gleichzeitig eine Rotationsbewegung der ersten Drehachse einschließlich des Halteelements um eine zweite Drehachse zu bewirken.

Die beiden Rotationsbewegungen können miteinander linear gekoppelt sein.

Die zweite Drehachse kann entlang einer dritten Richtung senkrecht zur Schneidrichtung des Schneidwerkzeugs verlaufen.

Die Mittel können einen beweglich gelagerten Rahmen umfassen, welcher um die zweite Drehachse drehbar gelagert ist und in welchem die erste Drehachse drehbar gelagert ist. Gemäß dem erfindungsgemäßen Verfahren ist vorgesehen, dass eine relative Bewegung zwischen einem Schneidwerkzeug, welches geeignet ist, entlang einer geraden Linie zu schneiden, und einem Werkstück ausgeführt wird derart, dass das Schneidwerkzeug das Werkstück entlang einer Linie schneidet, die einem Strahlengang in der herzustellenden Schlitzblende entspricht.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Dabei sind für jede der speziellen Blendenformen bevorzugte Konstruktionsprinzipien vorgesehen. Individuelle Ausführungen (Größen, Öffnungswinkel) können durch Anpassung der Übersetzungsverhältnisse bzw. von Abständen verwirklicht werden. Es zeigen:

| Figur 1 | eine Vorrichtung zum Strahlfräsen einer würfelförmigen Schlitzblende; |
| Figur 2a - 2c | die Vorrichtung in Draufsicht (Blickrich- |

tung z-Achse);

| Figur 3 | eine Abwandlung mit einer scheibenförmigen Feinfräse; |
| Figur 4 | eine Vorrichtung zum Strahlfräsen einer brennpunktorientierten Walzendrehblende; |
| Figuren 5a, b | die Funktionsweise des Zahnradsystems für zwei Orientierungen; |
| Figur 6 | die Vorrichtung in der Endposition des Fräsvorganges; |
| Figur 7 | einen alternativen Aufbau ohne Mittelachse; und |
| Figur 8 | einen alternativen Schneidemechanismus. |

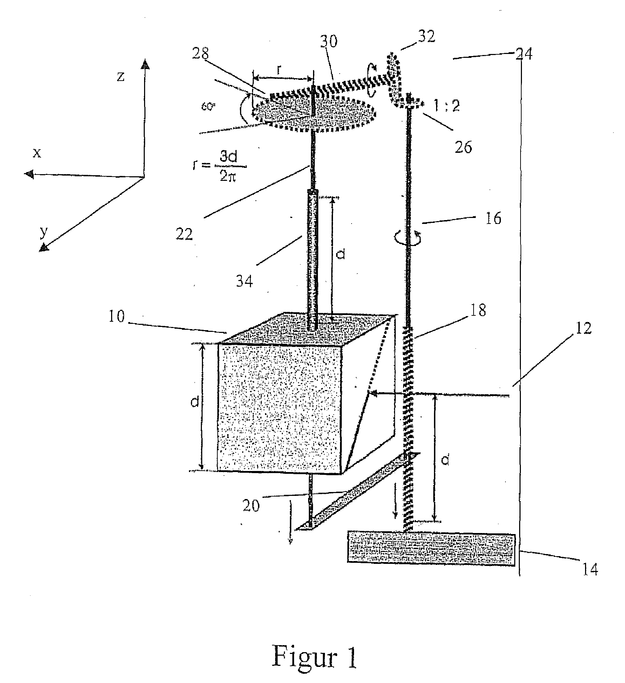

Figur 1 zeigt eine Vorrichtung zum Strahlfräsen einer Schlitzblende aus würfelförmigem Rohmaterial (Halbzeug) in Seitenansicht mit halb gefrästem Block. (Aus Gründen der Übersichtlichkeit sind Halterungsrahmen und Achslager weggelassen worden.) Diese Vorrichtung eignet sich zur Fertigung einer Schlitzblende gemäß Patentanmeldung DE 10 2005 029 674.2. Dabei wird ein würfelförmiges Werkstück 10 sowohl mit einem linear fortschreitenden Vorschub als auch mit einer gleichzeitig stattfindenden Drehung fortbewegt. Beide Bewegungen stehen in einem festen linearen Zusammenhang, so dass sie mit einer einfachen mechanischen Übersetzung gekoppelt werden können. Das Werkstück 10 besteht aus einem geeigneten Kollimatormaterial (zum Beispiel Densimet als mechanisch verarbeitbare Wolframlegierung). In Figur 1 ist ein dreidimensionales kartesisches Koordinatensystem eingezeichnet.

Mittels eines Motors 14 wird eine erste Gewindewelle 16, welche parallel zur z-Achse verläuft, angetrieben. Die erste Gewindewelle 16 weist einen Bereich 18 auf, der als Schneckenwelle ausgeformt ist. Durch mechanische Wechselwirkung mit dem Bereich 18 wird ein parallel zur y-Achse angeordneter Haltearm 20 in einer Richtung parallel zur z-Achse fortbewegt, wodurch eine mit dem Haltearm 20 verbundene, parallel zur z-Achse angeordnete zweite Gewindewelle 22 und das darauf angeordnete Werkstück 10 linear entlang der z-Achse bewegt wird. Die Rotation der beiden Gewindewellen 16, 22 erfolgt synchronisiert, wobei die mechanische Übertragung über ein Zahnradsystem 24 bewerkstelligt wird. Das Zahnradsystem 24 besteht aus zwei Zahnrädern (Stirn- oder Kegelzahnräder) 26, 28, welche auf den beiden Gewindewellen 16, 22 gelagert sind, sowie aus einer senkrecht zur z-Achse angeordneten Schneckenwelle 30. Auf der Schneckenwelle 30 ist ein weiteres Zahnrad 32 gelagert. Die Schneckenwelle 30 treibt das Zahnrad 28 auf der zweite Gewindewelle 22 an, während ebenfalls eine Übertragung der Drehbewegung zwischen den zueinander senkrecht angeordneten Zahnrädern 26, 32 erfolgt. Im vorliegenden Beispiel erfolgt an dieser Stelle eine Untersetzung der Geschwindigkeit von 2 : 1. Dadurch wird die Drehbewegung auf das Werkstück 10, welches auf der zweiten Gewindewelle 22 angeordnet ist, übertragen. Aufgrund der gleichzeitig ausgeführten linearen Abwärtsbewegung (parallel zur z-Achse) muss die Achse der zweiten Gewindewelle 22 mit der eigentlichen Halterung des Werkstückes teleskopartig mit einem Rohr 34 so verbunden sein, dass die Drehung übertragen, die parallel zur z-Achse gerichtete Abwärtsbewegung gleichzeitig aber nicht behindert wird. Um einen Öffnungswinkel von 60° zu überstreichen, während das Werkstück 10 über die Distanz d nach unten bewegt wird, muss bei dieser Anordnung das Zahnrad 28 einen Radius r von $3d/2\pi$ aufweisen, also rund von d/2.

Während der Rotationsbewegung des Werkstücks 10 um die zweite Gewindewelle 22 und der gleichzeitig ausgeführten Translationsbewegung entlang der z-Achse wird durch einen Schneidstrahl 12, welcher parallel zur x-Achse verläuft, ein Schlitz in das Werkstück 10 gefräst. Der Schneidstrahl 12 behält während des gesamten Fräsvorganges dieselbe Richtung (parallel zur x-Achse) bei. Er folgt dabei in umgekehrter Richtung dem zentralen Strahlengang durch die herzustellende Blende.

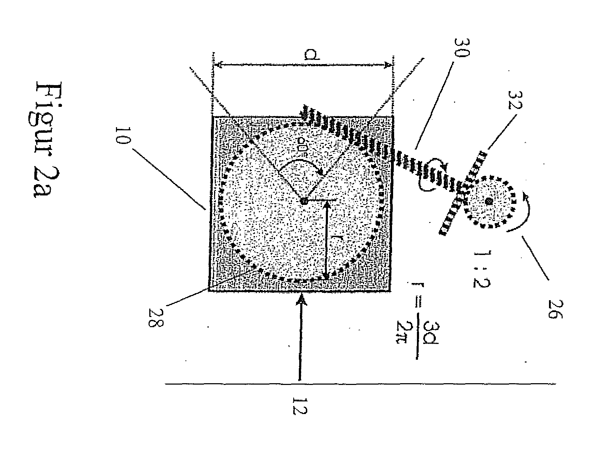

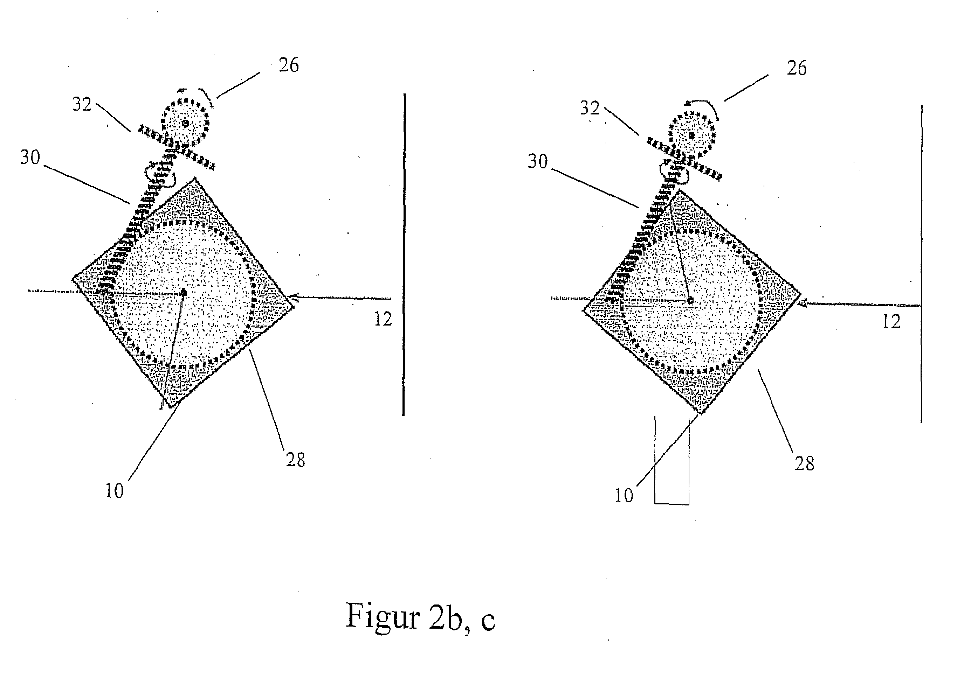

Figur 2 zeigt die erfindungsgemäße Vorrichtung in Draufsicht (Blickrichtung z-Achse). Figur 2a gibt dabei bevorzugte Maße für die Herstellung einer Schlitzblende mit einem Öffnungswinkel von 60°. Das Werkstück 10 ist hier ein Würfel mit der Kantenlänge d, der Radius des Zahnrads 28 ist so gewählt, dass $r=3d/2\pi$ gilt. Das Übersetzungsverhältnis zwischen den zueinander rechtwinklig angeordneten Zahnrädern 26 und 32 beträgt 1 : 2. Um den Fortgang der Herstellung von Anfang bis zum Ende zu verdeutlichen, ist in Figur 2b die Ausgangsstellung des würfelförmigen Rohlings 10 von oben zusammen mit dem künftigen Öffnungswinkel gezeigt. Folglich fällt der rechte Schenkel dieses Winkels mit der Schneidrichtung zusammen. Nach einem vollständigen Durchlauf wird die in Figur 2c skizzierte Endposition erreicht. Die in der Erfindung vorgesehenen Dreh- und Vorschubrichtungen können umgekehrt werden, womit ein Schlitz in gespiegelter Richtung geschnitten werden kann. Für einen Öffnungswinkel von 60° über eine Schnitthöhe von d können die einzelnen Übersetzungsverhältnisse frei abgeändert werden, solange die Gesamtübersetzung folgender Bedingung genügt:

$$r:d=3:(U \ \pi) \qquad (1),$$

wobei r der Radius des Zahnrades 28 ist, das die zweite Gewindewelle 22 antreibt, d die vertikale Vorschubstrecke und U das Untersetzungsverhältnis an der Richtungsumlenkung mit den beiden kleineren Zahnrädern 26 und 32. Die genannte Beziehung hat folgende Bedeutung: Über die Vorschubdistanz d muss eine Drehbewegung um ein Sechstel eines Vollkreises (60°) vollführt werden. Wird der Umfang eines gedachten Kreises ($2\pi r$) mit derselben Geschwindigkeit weitergedreht wie das Werkstück auf der Achse vorgeschoben wird, dann muss er sechsmal größer sein als die Vorschubstrecke ($6d=2\pi r$), um diese Bedingung zu erfüllen. Zwischengeschaltete Untersetzungen können die Größe dieses gedachten Kreises auf handlichere Maße anpassen. Entsprechend ist zu verfahren, wenn abweichende Öffnungswinkel gewünscht sind.

Die gesamte in den Figuren 1 und 2 dargestellte Mechanik kann in einen festen Rahmen eingebaut sein, soweit das Schneidwerkzeug 12 und die Bewegungen des Werkstücks 10 nicht behindert werden.

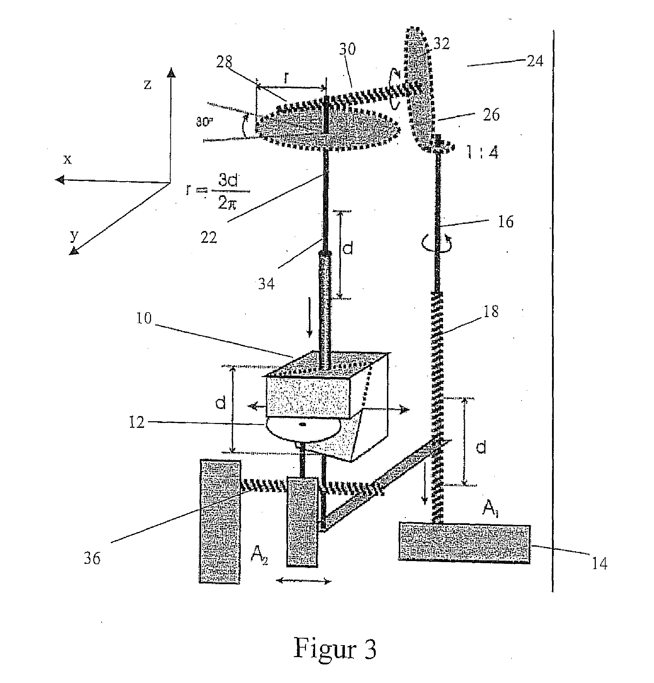

Figur 3 zeigt eine Abwandlung der in den Figuren 1 und 2 dargestellten Ausführungsform mit einer scheibenförmigen Feinfräse als Schneidwerkzeug. Sollen sehr kleine strahlende Objekte wie zum Beispiel die Brennflecke von Röntgenröhren abgebildet werden, müssen Schlitzblenden mit hoher Präzision gefertigt werden. Dabei kann mechanisches (Nach)Schleifen erforderlich werden. Hierzu ist die zuvor beschriebene Anordnung in der Weise abgewandelt, dass anstelle eines Schneidstrahles die Scheibe einer Feinfräse 10 als Schneidwerkzeug benutzt wird, die linear auf einer Schiene 36 hin- und herbewegt werden kann. In dieser Ausführungsform wird nur eine Seite einer Schlitzblende bearbeitet. Zwei komplementär ausgerichtete Hälften (in ihrer Grundform identisch) werden anschließend zu einer vollständigen Schlitzblende zusammengesetzt. Der Vorteil der Fertigung zweier Halbblenden ist, dass die Spaltbreite der Schlitzblende nachträglich justiert bzw. veränderlich gestaltet werden kann. Da Brennflecke nur wenige Millimeter groß sind, aber intensive Strahler darstellen, müssen Spaltbreiten vom 100 $\mu$m und kleiner erreicht werden, wozu Präzisionsschliffe erforderlich werden. Die kleinen Ausmaße eines Brennflecks und der Abstand der Blende, der durch die Röntgenröhre bedingt ist, lassen kleinere Öffnungswinkel (Aperturen) als 60° als sinnvoll erscheinen. Erreicht werden kann dies durch eine Abwandlung der Übersetzungsverhältnisse und in der oben genannten Bedingung (1) unter Einbeziehung des anzuwendenden Öffnungswinkels $\alpha$:

$$r : d = 180 : (\alpha U) \qquad (2).$$

Praktisch bedeutet dies, dass es für jeden Öffnungswinkel ein festes Verhältnis vom Radius des Zahnrads 28 mit Übersetzung zum Vorschub parallel zur z-Achse gibt. Mit entsprechendem Austauschen von Zahnradübersetzungen lassen sich somit unterschiedliche Öffnungswinkel mit ein und derselben Halterungsvorrichtung realisieren.

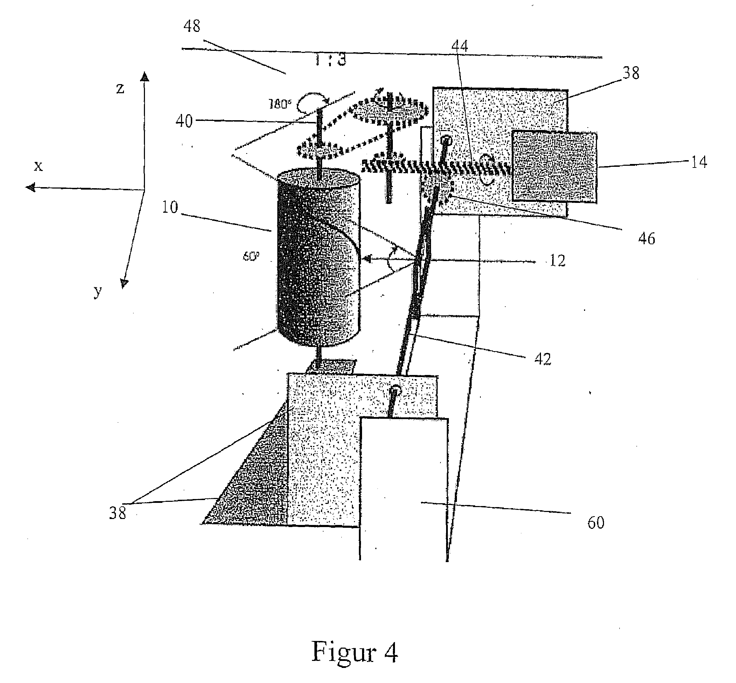

Figur 4 zeigt eine Vorrichtung zum Strahlfräsen einer brennpunktorientierten Walzendrehblende, wie sie in der Patentanmeldung DE 10 2005 048 519.7-54 beschrieben ist.

Im Unterschied zur in den Figuren 1 bis 3 dargestellten Herstellung einer Schlitzblende ist hier bei der Fertigung anstelle des vertikalen Vorschubs eine zweite Drehbewegung erforderlich, deren Drehachse rechtwinklig zur optischen Achse und zur Symmetrieachse der herzustellenden zylinderförmigen Blende angeordnet ist, durch den Brennpunkt verläuft. Während des Fräsens wird also eine Kipp- anstatt einer linearen Abwärtsbewegung ausgeführt, deren Winkel durch die gewünschte Öffnung festgelegt wird. Nach der in der Patentmeldung DE 10 2005 048 519.7-54 beschriebenen Bauart muss während einer Kippung das walzenförmige Werkstück eine halbe Drehung vollführen, das heißt um 180°. Dadurch ergibt sich ein festes Winkelvorschubverhältnis, womit auch hier eine lineare, rein mechanisch verwirklichbare Steuerung möglich ist und eine Programmierung einer aufwändigen Werkzeugmaschine sich erübrigt. Ein Öffnungswinkel von 60° erfordert demnach eine Übersetzung im Verhältnis 1 : 3. Die Schlitzhöhe, die durch die Lage des Brennpunktes festgelegt ist, wird durch den Abstand vom zylindrischen Rohling bestimmt. Auch in Figur 4 ist ein dreidimensionales kartesisches Koordinatensystem eingezeichnet. Allerdings muss beachtet werden, dass wegen der ausgeführten Drehbewegungen die Orientierung gewisser Achsen nicht fest ist, sondern während des Herstellungsprozesses variieren.

Die Schneidstrahlvorrichtung 10 ist in ihrer Lage und Ausrichtung fest montiert, so dass der Schneidstrahl während des gesamten Herstellungsprozesses parallel zur x-Achse verläuft.

Das zylinderförmige Werkstück 10 befindet sich auf einer ersten Drehachse 40, welche mit der Symmetrieachse des zylinderförmigen Werkstücks 10 zusammenfällt und in einem beweglich gelagerten Rahmen 38 drehbar gelagert ist. Der beweglich gelagerte Rahmen 38 ist um eine zweite Drehachse 42 drehbar gelagert, welche parallel zur y-Achse durch den Brennpunkt der herzustellenden Blende verläuft. Dabei steht die y-Achse sowohl senkrecht zur Schneidstrahlrichtung x, als auch senkrecht zur ersten Drehachse 40. Der Motor 14, welcher für den Antrieb für die Drehbewegungen sorgt, ist fest in dem beweglich gelagerten Rahmen 38 verankert. Der Motor 14 treibt eine Schneckenwelle 44 an, welche mit einem auf der zweiten Drehachse 42 angeordneten Schneckenrad 46 ein Schneckengetriebe bildet. Durch die Wirkungsweise des Schneckengetriebes 44, 46 wird der beweglich gelagerte Rahmen 38 um die zweite Drehachse 42 rotiert. Ein Zahnradsystem 48 ist im beweglich gelagerten Rahmens 38 so angeordnet, dass es synchron mit dem beweglich gelagerten Rahmen 38 um die zweite Drehachse 42 rotiert wird. Das Zahnradsystem 48 überträgt den Antrieb des Motors 14 in einer Weise, dass eine Rotationsbewegung der ersten Drehachse 40 erzeugt wird.

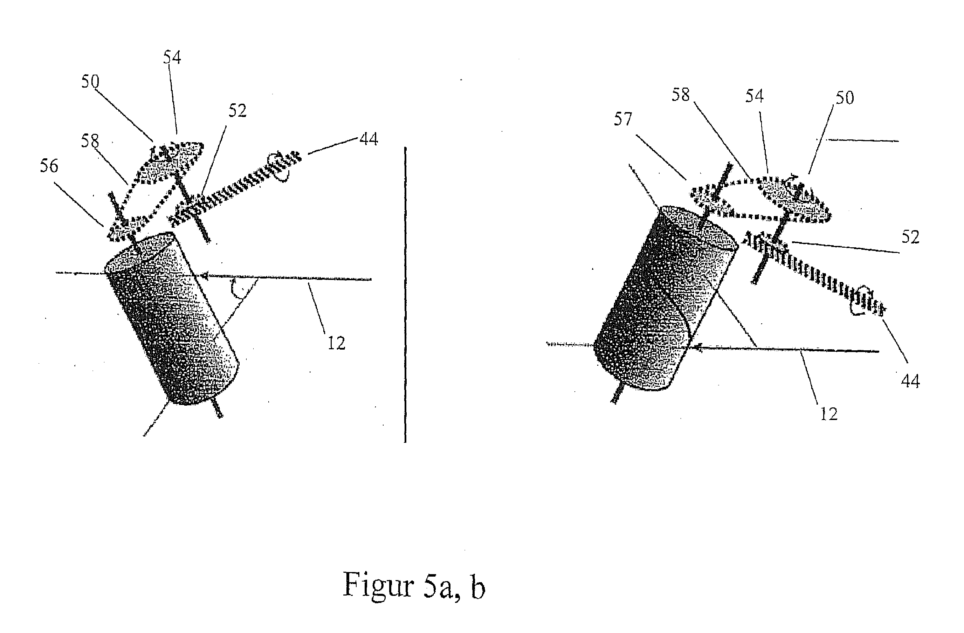

Die Figuren 5a, b zeigen die Funktionsweise des Zahnradsystems 48 für zwei Orientierungen der ersten Drehachse 40. Zwei Zahnräder 52, 54 sind auf einer parallel zur ersten Drehachse 40 verlaufenden dritten Drehachse 50 angeordnet, wobei eines der Zahnräder 52 mit der Schneckenwelle 44 ein Schneckengetriebe bildet, welches eine Rotation der dritten Drehachse 50 bewirkt. Auf dem Zahnrad 54 und einem auf der ersten Drehachse 40 angeordneten Zahnrad 56 ist eine Zahnradkette 57 angeordnet, welche eine Übertragung der Rotationsbewegung zwischen der ersten Drehachse 40 und der dritten Drehachse 50 bewirkt.

Der dargestellte Mechanismus steuert gleichzeitig die Kippbewegung des Halterahmens und die Drehung des walzenförmigen Werkstückes. Um die mechanischen Belastungen zu minimieren, ist die drehbare Vorrichtung um die fokale Achse gleichgewichtsmäßig auszutarieren. Falls im Aufbau eine feste Achse vorgesehen sein soll, muss eine Aussparung in der Form eines kleinen Fensters 58 oder eines U-förmigen Zwischenstückes für den Durchtritt des Schneidstrahles 12 im Zentrum vorgesehen sein.

In Figur 4 ist auch die Anordnung aller Funktionsteile und ihre Aufhängung in einer U-förmigen Trägerhalterung 60 im Stand einer halbfertigen Fräsung ersichtlich. Der Frässtrahl 12 bildet die Winkelhalbierende des Öffnungswinkels. Antriebsmotor 14 und Schneckenwelle 44 sind am hinteren Teil des beweglichen Rahmens 38 angebracht. Der Schneckenantrieb läuft zunächst über ein Schneckenrad 46, das fest mit dem beweglichen Rahmen 38 verbunden ist. Hierüber wird die Kippbewegung gesteuert.

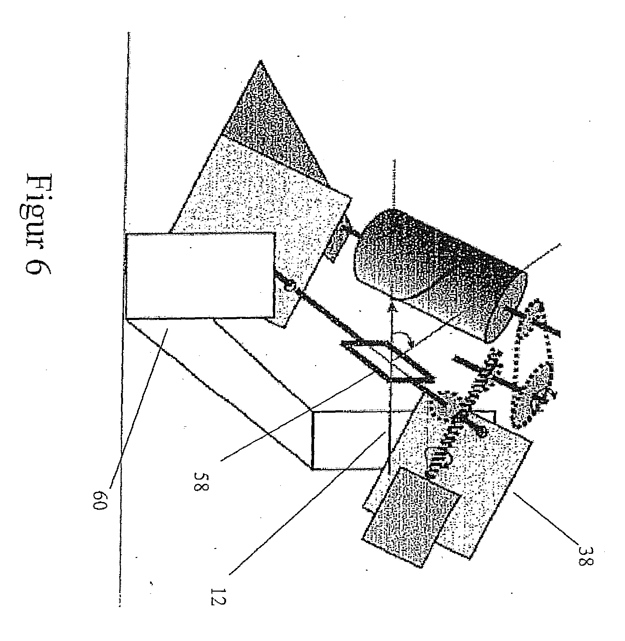

Figur 6 zeigt die Endposition des Fräsvorganges. Verdeutlicht wird hierbei, dass das Schneckenrad 46 an der Antriebswelle für die Kippbewegung fest mit dem beweglichen gelagerten Rahmen 38 verbunden ist und somit die Drehung der gesamten Innenhalterung mitsamt dem Werkstück 10 und dem Antrieb (Motor 14) bewirkt.

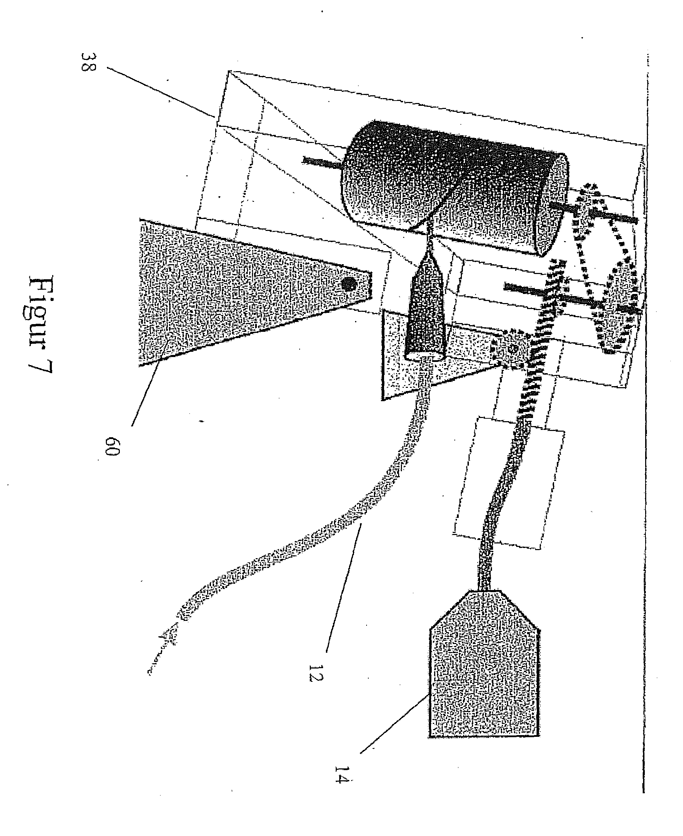

Figur 7 zeigt einen alternativen Aufbau, in dem zum einen auf die Mittelachse, die zweite Drehachse 42, gänzlich verzichtet wird, um mehr Platz für die Strahldüse 12 zu lassen, zum anderen ein feststehender Motorantrieb 14 vorgesehen ist, der über eine flexible Welle mit der Halterung verbunden ist. Somit wird der Einsatz einer handelsüblichen Bohrmaschine bzw. eines elektrischen Schraubendrehers mit regulierbarer Umdrehungszahl auch in diesem Aufbau ermöglicht.

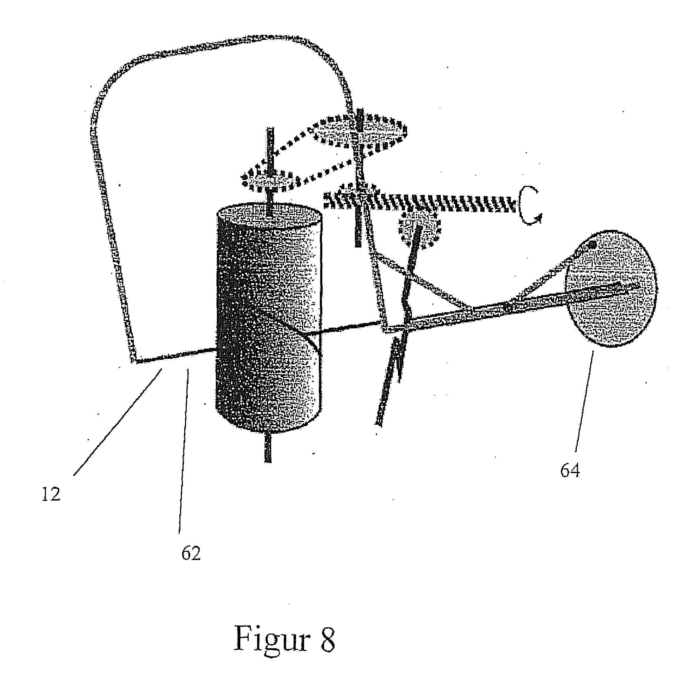

Figur 8 zeigt eine Anordnung mit einem alternativen Schneidemechanismus. Ein Sägeband 12, beispielsweise einer Laubsäge, wird mit einem Exzenter 64 angetrieben und auf einer Schiene geführt, die in Schnittrichtung ausgerichtet ist. Wenn diese Vorrichtung um den Brennpunkt der Walzendrehblende drehbar aufgehängt ist, wie in der Figur angedeutet, dann kann, im Gegensatz zur oben beschriebenen Schneidstrahleinrichtung, die übrige Halterung fest montiert sein. Dies kann von Vorteil sein, um der Bügelführung Platz zu verschaffen.

BEZUGSZEICHENLISTE

| | |
|---|---|
| 10 | Werkstück |
| 12 | Schneidwerkzug/Schneidstrahl/Feinfräse |
| 14 | Motor |
| 16 | erste Gewindewelle |
| 18 | Bereich Schneckenwelle |
| 20 | Haltearm |
| 22 | zweite Gewindewelle |
| 24 | Zahnradsystem |
| 26, 28, 32 | Zahnräder |
| 30 | Schneckenwelle |
| 34 | Rohr |
| 36 | Schiene für Feinfräse |
| 38 | beweglich gelagerter Rahmen |
| 40 | erste Drehachse |
| 42 | zweite Drehachse |
| 44 | Schneckenwelle |
| 46 | Schneckenrad |
| 48 | Zahnradsystem |
| 50 | dritte Drehachse |
| 52, 54, 56 | Zahnräder |
| 57 | Zahnradkette |
| 58 | Fenster |
| 60 | fester Rahmen |
| 62 | Laubsäge |
| 64 | Exzenter |

**Patentansprüche**

1. Vorrichtung zur Herstellung einer Schlitzblende, **dadurch gekennzeichnet, dass** sie

   - ein Schneidwerkzeug (12), welches geeignet ist, entlang einer geraden Linie zu schneiden, und
   - Mittel, welche geeignet sind, eine relative Bewegung zwischen dem Schneidwerkzeug (12) und einem Werkstück (10) zu bewirken derart, dass das Schneidwerkzeug (12) das Werkstück (10) entlang einer Linie schneidet, die einem Strahlengang in der herzustellenden Schlitzblende entspricht, umfasst.

2. Vorrichtung nach Anspruch 1, **dadurch gekennzeichnet, dass** **das** Schneidwerkzeug (12) geeignet ist, entlang einer festen ersten Richtung (x) zu schneiden.

3. Vorrichtung nach Anspruch 2, **dadurch gekennzeichnet, dass** **das** Schneidwerkzeug (12) unbeweglich angeordnet ist.

4. Vorrichtung nach Anspruch 2 oder 3, **dadurch gekennzeichnet, dass** die Mittel ein Halteelement umfassen, auf welchem ein Werkstück (10) befestigbar ist und welches um eine erste Drehachse (22, 40) drehbar gelagert ist.

5. Vorrichtung nach Anspruch 4, **dadurch gekennzeichnet, dass** die erste Drehachse entlang einer zweiten Richtung (z) senkrecht zur Schneidrichtung (x) des Schneidwerkzeugs (12) verläuft und dass die Mittel dazu geeignet sind, eine Rotationsbewegung des Halteelements (22) um die erste Drehachse und gleichzeitig eine Translationsbewegung des Halteelements (22) entlang der zweiten Richtung (z) zu bewirken.

6. Vorrichtung nach Anspruch 5, **dadurch gekennzeichnet, dass** die Rotationsbewegung und die Translationsbewegung des Halteelements (22) linear gekoppelt sind.

7. Vorrichtung nach Anspruch 6, **dadurch gekennzeichnet, dass** die Mittel eine erste und eine zweite Gewindewelle (16, 22) umfassen, welche beide in der zweiten Richtung (z) verlaufen, und wobei eine Rotationsbewegung der beiden Gewindewellen (16, 22) durch ein Zahnradsystem (24) gekoppelt ist.

8. Vorrichtung nach Anspruch 7, **dadurch gekennzeichnet, dass** die erste Gewindewelle (16) einen Bereich (18) umfasst, welcher als Schneckenwelle ausgeformt ist, durch welchen ein Haltearm (20), mit welchem die zweite Gewindewelle (22) verbunden ist, entlang der zweiten Richtung (z) bewegbar ist.

9. Vorrichtung nach Anspruch 4, **dadurch gekennzeichnet, dass** die Mittel dazu geeignet sind, eine Rotationsbewegung des Halteelements (22) um die erste Drehachse und gleichzeitig eine Rotationsbewegung der ersten Drehachse einschließlich des Halteelements (22) um eine zweite Drehachse (42) zu bewirken.

10. Vorrichtung nach Anspruch 9, **dadurch gekennzeichnet, dass** die beiden Rotationsbewegungen miteinander linear gekoppelt sind.

11. Vorrichtung nach Anspruch 9 oder 10, **dadurch gekennzeichnet, dass** die zweite Drehachse (42) entlang einer dritten Richtung (y) senkrecht zur Schneidrichtung (x) des Schneidwerkzeugs (12) verläuft

**12.** Vorrichtung nach einem der Ansprüche 9 bis 11,
**dadurch gekennzeichnet, dass**
die Mittel einen beweglich gelagerten Rahmen (38) umfassen, welcher um die zweite Drehachse (42) drehbar gelagert ist und in welchem die erste Drehachse (40) drehbar gelagert ist.

**13.** Verfahren zur Herstellung einer Schlitzblende,
**dadurch gekennzeichnet, dass**
eine relative Bewegung zwischen einem Schneidwerkzeug (12), welches geeignet ist, entlang einer geraden Linie zu schneiden, und einem Werkstück (10) ausgeführt wird derart, dass das Schneidwerkzeug (12) das Werkstück (10) entlang einer Linie schneidet, die einem Strahlengang in der herzustellenden Schlitzblende entspricht.

**14.** Verfahren nach Anspruch 13,
**dadurch gekennzeichnet, dass**
das Werkstück (10) entlang einer unveränderlichen ersten Richtung (x) geschnitten wird.

**15.** Verfahren nach Anspruch 14,
**dadurch gekennzeichnet, dass**
eine Rotationsbewegung des Werkstücks (10) um eine erste Drehachse, welche entlang einer zweiten Richtung (z) senkrecht zur Schneidrichtung (x) des Schneidwerkzeugs (12) verläuft, und gleichzeitig eine Translationsbewegung des Werkstücks (10) entlang der zweiten Richtung (z) ausgeführt wird.

**16.** Verfahren nach Anspruch 14,
**dadurch gekennzeichnet, dass**
die Rotationsbewegung und die Translationsbewegung des Werkstücks (10) linear gekoppelt werden.

**17.** Verfahren nach Anspruch 14,
**dadurch gekennzeichnet, dass**
eine Rotationsbewegung des Werkstücks (10) um eine erste Drehachse (40) und gleichzeitig eine Rotationsbewegung der ersten Drehachse (40) einschließlich des Werkstücks (10) um eine zweite Drehachse (42) ausgeführt wird.

**18.** Verfahren nach Anspruch 17,
**dadurch gekennzeichnet, dass**
die beiden Rotationsbewegungen miteinander linear gekoppelt werden.

Figur 1

$r = \dfrac{3d}{2\pi}$

Figur 2a

$$r = \frac{3d}{2\pi}$$

1 : 2

Figur 2b, c

Figur 3

Figur 4

**Figur 5a, b**

Figur 6

Figur 7

Figur 8

Europäisches
Patentamt

European
Patent Office

Office européen
des brevets

**EUROPÄISCHER RECHERCHENBERICHT**

**Nummer der Anmeldung**

EP 08 16 5913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/221308 A1 (HESSBRUGGEN NORBERT [DE]) 4. Dezember 2003 (2003-12-04) * Absatz [0015] - Absatz [0018]; Abbildungen * ----- | 1-7,9-18 | INV. B26F1/26 B23Q1/48 B23Q1/54 |
| A | FR 2 352 634 A (BERTHIEZ C N M P [FR]) 23. Dezember 1977 (1977-12-23) * Zusammenfassung; Abbildungen * ----- | 1-12 | |
| D,A | DE 10 2005 029674 A1 (BAM BUNDESANSTALT MATFORSCHUNG [DE]) 28. Dezember 2006 (2006-12-28) ----- | | |
| D,A | DE 10 2005 048519 A1 (BAM BUNDESANSTALT MATFORSCHUNG [DE]) 19. April 2007 (2007-04-19) ----- | | |

**RECHERCHIERTE SACHGEBIETE (IPC)**

B26F
B23Q

Der vorliegende Recherchenbericht wurde für alle Patentansprüche erstellt

| Recherchenort | Abschlußdatum der Recherche | Prüfer |
|---|---|---|
| München | 3. April 2009 | Canelas, Rui |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 08 16 5913

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2009

| Im Recherchenbericht angeführtes Patentdokument | Datum der Veröffentlichung | Mitglied(er) der Patentfamilie | | Datum der Veröffentlichung |
|---|---|---|---|---|
| US 2003221308 A1 | 04-12-2003 | CN | 1476947 A | 25-02-2004 |
| | | DE | 10224347 A1 | 11-12-2003 |
| | | EP | 1366852 A2 | 03-12-2003 |
| | | JP | 2003340660 A | 02-12-2003 |
| FR 2352634 A | 23-12-1977 | BR | 7703335 A | 14-03-1978 |
| | | DD | 130008 A5 | 01-03-1978 |
| | | DE | 2720876 A1 | 08-12-1977 |
| | | ES | 459138 A1 | 16-04-1978 |
| | | FI | 771643 A | 26-11-1977 |
| | | IT | 1080868 B | 16-05-1985 |
| | | JP | 52143573 A | 30-11-1977 |
| | | NO | 771815 A | 28-11-1977 |
| | | PL | 198345 A1 | 30-01-1978 |
| | | SE | 7706036 A | 26-11-1977 |
| DE 102005029674 A1 | 28-12-2006 | EP | 1897095 A2 | 12-03-2008 |
| | | WO | 2006136545 A2 | 28-12-2006 |
| DE 102005048519 A1 | 19-04-2007 | AT | 421151 T | 15-01-2009 |
| | | EP | 1772874 A2 | 11-04-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005029674

- DE 102005048519754